# EUROPEAN PATENT APPLICATION

(11) **EP 4 175 194 A1**
(43) Date of publication of application: **03.05.2023**
(21) Application number: 21831717.0
(22) Date of filing: 22.04.2021
(51) Int. Cl.: H04B 7/155

(54) **ACCESS METHOD FOR THIRD-PARTY DEVICE, SYSTEM, AND PICO RADIO REMOTE UNIT**

(30) Priority: 30.06.2020 CN 202010618587
(71) Applicant: ZTE Corporation, Shenzhen, Guangdong 518057 (CN)
(72) Inventor: ZHOU, Wenbin, Shenzhen, Guangdong 518057 (CN); LIU, Kai, Shenzhen, Guangdong 518057 (CN); ZHANG, Diqiang, Shenzhen, Guangdong 518057 (CN); CHEN, Chuan, Shenzhen, Guangdong 518057 (CN)
(74) Representative: Osterhoff, Utz
(86) International application number: PCT/CN2021/089001
(87) International publication number: WO 2022/001316

(57) **Abstract**

Disclosed are an access method, system, pico radio remote unit for a third party device. The above method includes a pico radio remote unit (PRRU) being connected to the third party device through a first conversion interface and receiving third party device data of the third party device; generating, by the PRRU, a first message according to the third party device data; and sending, by the PRRU, the first message to a remote radio unit hub (RHUB) or a base band unit (BBU) through a control channel, and the RHUB or the BBU generating a second message according to the first message and sending the second message to a third party server through a second conversion interface.

## Description

### CROSS-REFERENCE TO RELATED APPLICATIONS

The present application claims priority to Chinese Patent Application No. 202010618587.8, filed on June 30, 2020, the content of which are incorporated herein by reference in their entireties.

### TECHNICAL FIELD

Embodiments of the present application relate to the technical field of wireless communication networks, and in particular to an access method and an access system for a third party device, and a pico radio remote unit.

### BACKGROUND

With the advent of the fifth generation of mobile communication technology (5G), the explosive growth of data volume, room division system is more and more widely used, the traditional active room division system only carries communication and other functions, but with the diversity of application needs, the room division system has put forward more requirements, such as network cameras (IP camera), Bluetooth, positioning and other device accessing to the third party, to complete other functional applications besides some communications.

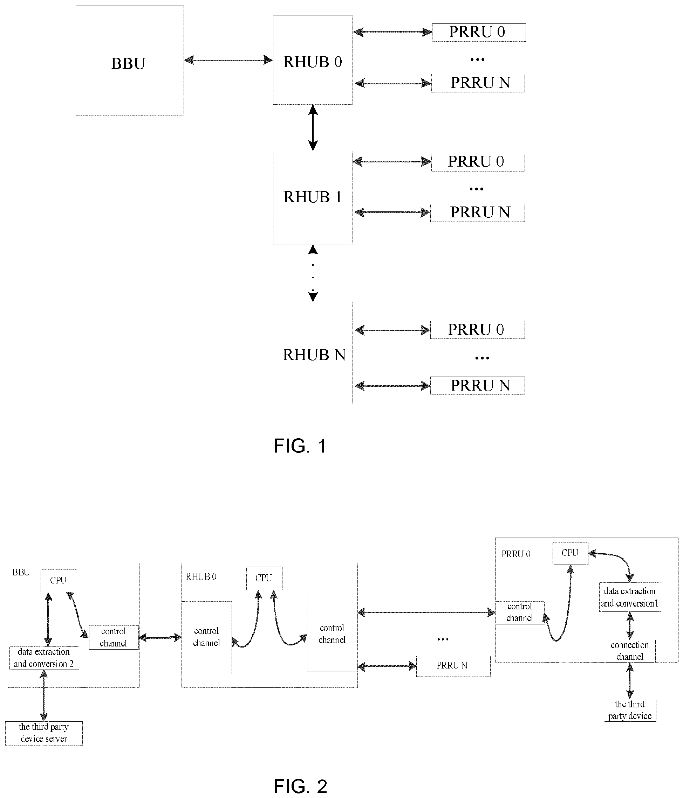

The basic network topology of the room division system is shown in FIG. 1, which usually consists of a base band unit (BBU), a radio remote unit hub (RHUB), and a pico radio remote unit (PRRU).

The inventors found at least the following problems in the related technology: the third party device cannot be accessed and related data cannot be processed under the room division system architecture.

### SUMMARY

Embodiments of the present application provide an access method for a third party device based on the room division system, including: a pico radio remote unit (PRRU) being connected to the third party device through a first conversion interface and receiving third party device data of the third party device; generating, by the PRRU, a first message according to the third party device data; and sending, by the PRRU, the first message to a remote radio unit hub (RHUB) or a base band unit (BBU) through a control channel, and the RHUB or the BBU generating a second message according to the first message and sending the second message to a third party server through a second conversion interface.

Embodiments of the present application also provide a pico radio remote unit (PRRU), including: a receiving unit, connected to a third party device through a first conversion interface and receiving third party device data of the third party device; a generation unit, generating a first message according to the third party device data; and a sending unit, sending the first message to a RHUB or a BBU through a control channel, and the RHUB or the BBU generating a second message according to the first message, and sending the second message to a third party server through a second conversion interface.

Embodiments of the present application also provide an access system for a third party device based on the room division system, including: a third party device, a PRRU, a RHUB, a BBU, and a third party server; the PRRU being connected to the third party device through a first conversion interface; the RHUB being connected to the BBU through the RHUB; the third party server being connected to the RHUB or BBU through a second conversion interface; and the PRRU for connecting to the third party device through the first conversion interface and receiving third party device data of the third party device, generating a first message according to the third party device data, conveying the first message to the RHUB or BBU through a control channel, the RHUB or the BBU generating a second message according to the first message, and sending the second message to the third party server through the second conversion interface.

Embodiments of the present application also provide an access method for a third party device based on the room division system, including: a pico radio remote unit (PRRU) being connected to the third party device through a first conversion interface and receiving third party data of the third party device; and generating, by the PRRU, a fifth message according to the third party data and sending the fifth message to the RHUB through a data channel; exchanging and merging, by the RHUB, data sent from all PRRUs of this level and the RHUB of a next level to generate a sixth message, and converting the sixth message into a seventh message and sending the seventh message to the third party server through the data channel.

Embodiments of the present application also provide a pico radio remote unit (PRRU), including: a receiving unit, connected to a third party device through a first conversion interface and receiving third party data of the third party device; a conversion unit, generating a fifth message according to the third party data; and a sending unit, sending the fifth message to a RHUB through a data channel, the RHUB exchanging and merging data sent from all the PRRUs of this level and the RHUB of a next level to generate a sixth message; and converting the sixth message into a seventh message and sending the seventh message to a third party server through a data channel.

Embodiments of the present application also provide an access system for a third party device based on the room division system, including: a third party device, a PRRU, a RHUB, a BBU, and a third party server; the PRRU for connecting to the third party device through a first conversion interface, and receiving third party data of the third party device, generating a fifth message according to the third party data and sending the fifth message to the RHUB through a data channel; and the RHUB exchanging and merging data sent from all PRRUs of this level and the RHUB of a next level to generate a sixth message, and converting the sixth message into a seventh message and sending the seventh message to the third party server through the data channel.

### BRIEF DESCRIPTION OF THE DRAWINGS

One or more embodiments are illustrated exemplarily by the drawings, and these exemplary illustrations do not constitute a limitation of the embodiments, and the components in the drawings having the same reference number are indicated as similar components, and the drawings do not constitute a limitation of scale unless specifically stated.

In order to better illustrate the method and application apparatus of the present application will be further described below in conjunction with the drawings.
FIG. 1 is a schematic structural diagram of a basic network of a room division system of the prior art.
FIG. 2 is a schematic structural diagram of an access system for a third party that takes a control channel when a BBU is connected to a third party server according to an embodiment of the present application.
FIG. 3 is a schematic structural diagram of the access system for the third party that takes the control channel when a RHUB is connected to the third party server according to an embodiment of the present application.
FIG. 4 is a schematic structural diagram of a PRRU according to an embodiment of the present application.
FIG. 5 is a flowchart of an access method for the third party device based on the room division system according to an embodiment of the present application.
FIG. 6 is a flowchart of an uplink processing of the third party device based on the control channel according to an embodiment of the present application.
FIG. 7 is a flowchart of a downlink processing of the third party device based on the control channel according to an embodiment of the present application.
FIG. 8 is a schematic diagram of an access system for the third party that takes a data channel when the BBU is connected to a third party server according to an embodiment of the present application.
FIG. 9 is a schematic diagram of the access system for the third party that takes the data channel when the RHUB is connected to the third party server according to an embodiment of the present application.
FIG. 10 is a schematic structural diagram of the PRRU according to an embodiment of the present application.
FIG. 11 is a flowchart of the access method for the third party device based on the room division system according to an embodiment of the present application.
FIG. 12 is a flowchart of an uplink processing of the third party device based on the data channel according to an embodiment of the present application.
FIG. 13 is a flowchart of a downlink processing of the third party device based on the data channel according to an embodiment of the present application.
FIG. 14 is a schematic diagram of a data message according to an embodiment of the present application.

### DETAILED DESCRIPTION OF THE EMBODIMENTS

In order to make the purpose, technical solutions and advantages of the embodiments of the present application clearer, each of the embodiments of the present application will be described in detail below in conjunction with the drawings. However, it will be understood by those skilled in the art that in each embodiment of the present application, many technical details are presented to enable the reader to better understand the present application. However, even without these technical details and various variations and modifications according to each of the following embodiments, the technical solutions protected by the present application can be realized. The following individual embodiments are divided for descriptive convenience and shall not constitute any limitation to the specific manner of the present application, and the individual embodiments may be combined and referenced to each other without contradiction.

The present application aims to provide an access method and an access system for the third party device, and a pico radio remote unit (PRRU). A new framework based on the room division system is provided, such the room division system can access the third party device.

The present application proposes an access scheme for a third party device based on a room division system. A conversion interface is added to the PRRU on the room division system for the access of the third party device, and a conversion interface is added to the RHUB or the BBU for the access of the third party server. The third party device is accessed in multiplexing the transmission channels of the existing room division system through the two defined data extraction and conversion methods and modules. The following specific description.

There are two ways for transferring data in the present application, one is through the control channel and the other is through the data channel, and the control channel is described first.

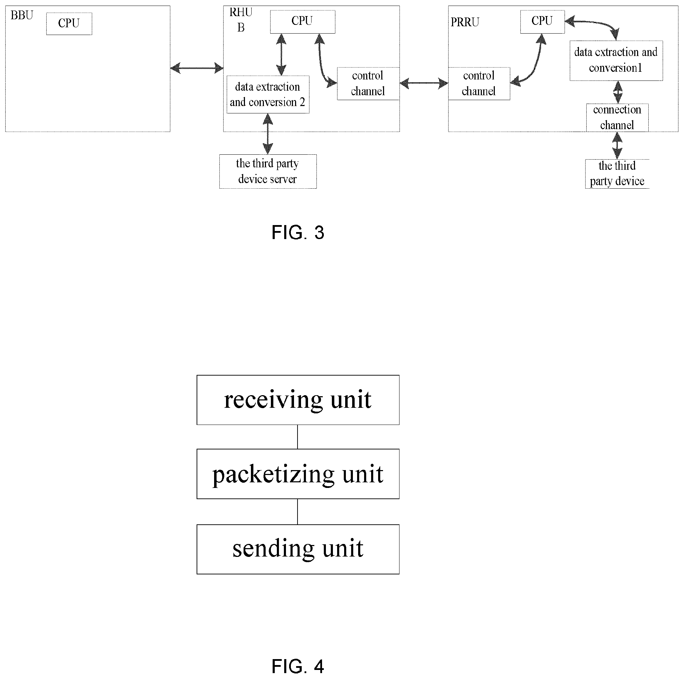

As shown in FIGS. 2 and 3, an access system for the third party device based on the room division system described in the present application. FIG. 2 is a schematic structural diagram of the access system for the third party device that takes the control channel when the BBU is connected to the third party server according to the embodiment of the present application. FIG. 3 is a schematic structural diagram of the access system for the third party device that takes the control channel when the RHUB is connected to the third party server according to the embodiment of the present application. The system includes: a third party device, a PRRU, a RHUB, a BBU, and a third party server. The PRRU is connected to the third party device through a first conversion interface. The RHUB is connected to the BBU through the RHUB. The third party server is connected to the RHUB or BBU through a second conversion interface. The PRRU is used for: connecting to a third party device through the first conversion interface and receiving third party device data of the third party device; packaging the third party device data into a first message; sending the first message to the RHUB or BBU through a control channel, and the RHUB or the BBU generating a second message according to the first message and sending the second message to a third party server through a second conversion interface.

Accordingly, as shown in FIG. 4, the present application also provides a PRRU, including: a receiving unit connected to the third party device through the first conversion interface and receiving third party device data of the third party device, a packetizing unit for generating a first message according to the third party device data, and a sending unit for sending the first message to the RHUB or the BBU through a control channel, the RHUB or the BBU generating a second message according to the first message and sending the second message to a third party server through a second conversion interface.

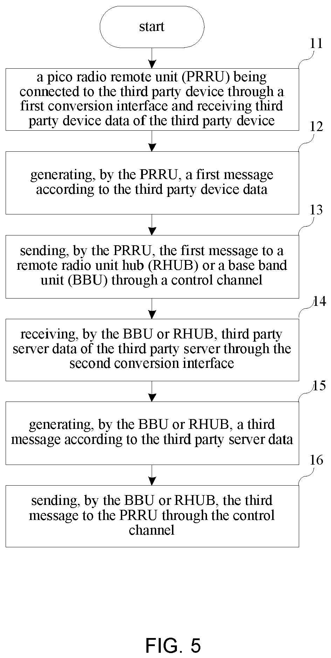

The following describes an access method for the third party device based on the room division system according to the system of FIGS. 2 and 3, as shown in FIG. 5, including:
operation 11, the PRRU being connected to the third party device through the first conversion interface and receiving third party device data of the third party device.
operation 12, generating, by the PRRU, a first message according to the third party device data; the first message includes: a PRRU number bit for indicating location information of the third party device, a data valid enable bit for indicating the number of valid bytes of third party data, a third party data flag bit for indicating types of messages, a control information bit for conveying control information for an interaction between the third party server and the third party device, and a third party data bit for carrying data of the third party device.
operation 13, sending, by the PRRU, the first message to a remote radio unit hub (RHUB) or a base band unit (BBU) through a control channel, and the RHUB or the BBU generating a second message according to the first message and sending the second message to a third party server through a second conversion interface. The second message is determined according to data format requirements of the third party server. The operation of the sending, by the PRRU, the first message to the RHUB or the BBU through the control channel includes: sending, by the PRRU, the first message to the BBU through the RHUB in the control channel in response that the third party server is connected to the BBU.

The above is an uplink process using the control channel.

The method further includes:
operation 14, receiving, by the BBU or RHUB, third party server data of the third party server through the second conversion interface;
operation 15, generating, by the BBU or RHUB, a third message according to the third party server data, the third message includes: a PRRU number bit for indicating the location information of the third party device, a data valid enable bit for indicating the number of valid bytes of third party data, a third party data flag bit for indicating types of messages, a control information bit for conveying control information for an interaction between the third party server and the third party device, and a third party data bit for carrying the data of third party server.
operation 16, sending, by the BBU or RHUB, the third message to the PRRU through the control channel, and generating, by the PRRU, a fourth message according to the third message and sending the fourth message to the third party device. The fourth message is determined on data format requirements of the third party device. The operation of sending, by the BBU or RHUB, the third message to the PRRU through the control channel includes: identifying, by the BBU or RHUB, a type of the third message according to the third party data flag bits carried in the third message; and sending the PRRU corresponding the PRRU number bit through the control channel according to the PRRU number bit carried in the third message.

Two embodiments of the present application are described below.

FIG. 2 and FIG. 3 both show the third party access according to the control channel, the main difference is whether the third party server is on the BBU or on the RHUB, and the first embodiment is explained in terms of FIG. 2.

The access based on the control channel is described as below.

The main operations of the data transmission method of the present application are as follows.

### The first embodiment: Uplink processing.

(1) The third party device is accessed to the PRRU and intercepts the valid data of the third party device.
(2) The logical unit of the PRRU performs the first extraction and conversion on the third party data, packages it into a custom message format, and sends it to the central processing unit (CPU) of the PRRU.
(3) The CPU of the PRRU recognizes the message and forwards it directly to the CPU of the RHUB/BBU through the control channel.
(4) After receiving this message, the CPU of the RHUB/BBU sends the message to an underlying logic unit of the RHUB/BBU, the underlying logic unit performs the second extraction and conversion on the message and packages it into the corresponding format, and sends it to the third party server.

### Downlink processing.

(1) The data of the third party server hung outside the BBU/RHUB is intercepted.
(2) The logical unit of the BBU/RHUB performs the second extraction and conversion on the data and packages it into a custom message format and sends it to the CPU of the BBU/RHUB.
(3) The CPU of the BBU/HUB recognizes the message and forwards it directly to CPU of the PRRU through the control channel.
(4) After receiving the message, the CPU of the PRRU then sends it to the underlying logic unit of the PRRU, and the underlying logic unit performs the first extraction and conversion on the data and packages it into the corresponding format and sends it to the third party device.

The second embodiment: the third party server is accessed by taking the control channel when the BBU is connected to the third party server.

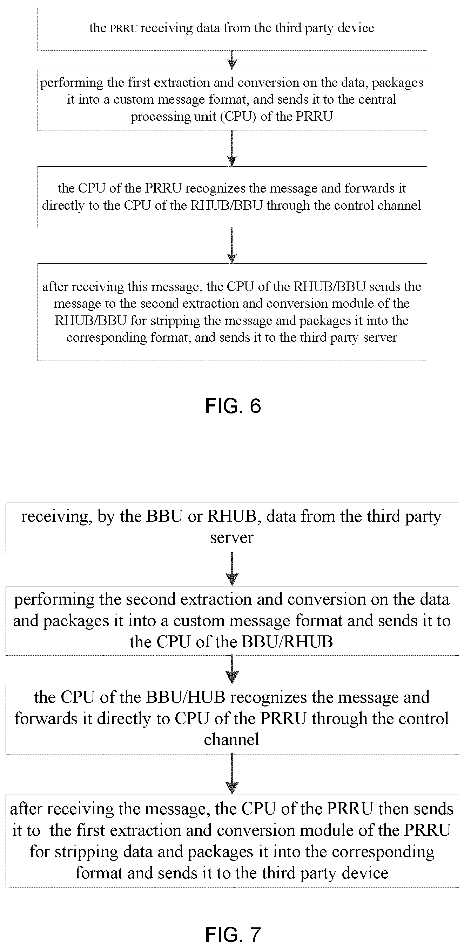

Uplink processing: as shown in FIG. 6, includes:
(1) The third party device is connected to the PRRU through the conversion interface, and the third party device conveys the data to a data extraction and conversion module 1 of the PRRU through this conversion interface, and the PRRU supplies power to the third party device through a power over ethernet (POE).
(2) The data extraction and conversion module 1 extracts the valid data into A data according to the relevant interface protocol of the third party device, and then encapsulates the A data into a customized ethernet message B. The customized ethernet message B includes the PRRU number, the third party message flag, the valid data flag and other information; finally, the converted message B is sent to the CPU of the PRRU.
(3) The CPU of the PRRU receives the B message, recognizes the third party message flag, forwards the message directly to the control channel at the bottom, and conveys the B message to the CPU of RHUB through the control channel. The CPU of the RHUB does not do any processing, and forwards the B message directly to the CPU of the BBU through the control channel.
(4) After receiving this B message, the CPU of the BBU recognizes the third party message flag and sends it to the corresponding data extraction and conversion module 2. After receiving the B message, the data extraction and conversion module 2 re-extracts the data in the B message according to the data valid flag and the PRRU number, converts extracted data into data C according to the format requirements, and sends data C to the third party server hung outside the base band unit through the interconnection interface.

Downlink processing: as shown in FIG. 7, includes:
(1) The third party server is connected to the BBU through the conversion interface, and the third party server conveys the data to the data extraction and conversion module 2 of the BBU through this conversion interface.
(2) The extraction and conversion module 2 of the BBU extracts the valid data into A data according to the relevant interface protocol of the third party server, and then encapsulates the A data into a customized ethernet message B. The customized ethernet message B includes information such as the PRRU number, the third party message flag, and the data valid flag; finally, the converted B message is sent to the CPU of the BBU.
(3) The CPU of the BBU receives the B message, recognizes the third party message flag, forwards the message directly to the control channel of the underlying chip, and conveys the B message to the CPU of the RHUB through the control channel. After receiving the message B, the CPU of the RHUB forwards the message B to the control channel of the corresponding PRRU according to the PRRU number.
(4) After receiving this message B, the CPU of the PRRU recognizes the third party message flag and sends it to the corresponding extraction and conversion module 1. After receiving the message B, the extraction and conversion module 1 re-extracts the data in the message B according to the valid data information, and converts the extracted data into the data C according to the format requirements, and sends the data C to the third party device hung besides the PRRU.

The data format of the ethernet message B is as follows.

| | | | | | |
|---|---|---|---|---|---|
| Preceding | Target MAC | Source MAC | Control information | Third party data | FCS |

The control information includes PRRU number: X bit, used to define the location information of the device and used to process the data by the extraction and conversion module; data valid enable: M bit, used to indicate how many bytes are valid in the third party data; third party flag: 1 bit, used by the CPU to distinguish types of messages; other control information: Y bit, used to convey the control information of the interaction between the third party server and the device; third party data: Z bit, used to transmit data.

The conversion and extraction module reorganizes the third party data based on the interface format requirements according to the control information, and sends the reorganized the data to the device.

### The following describes the access based on the data channel.

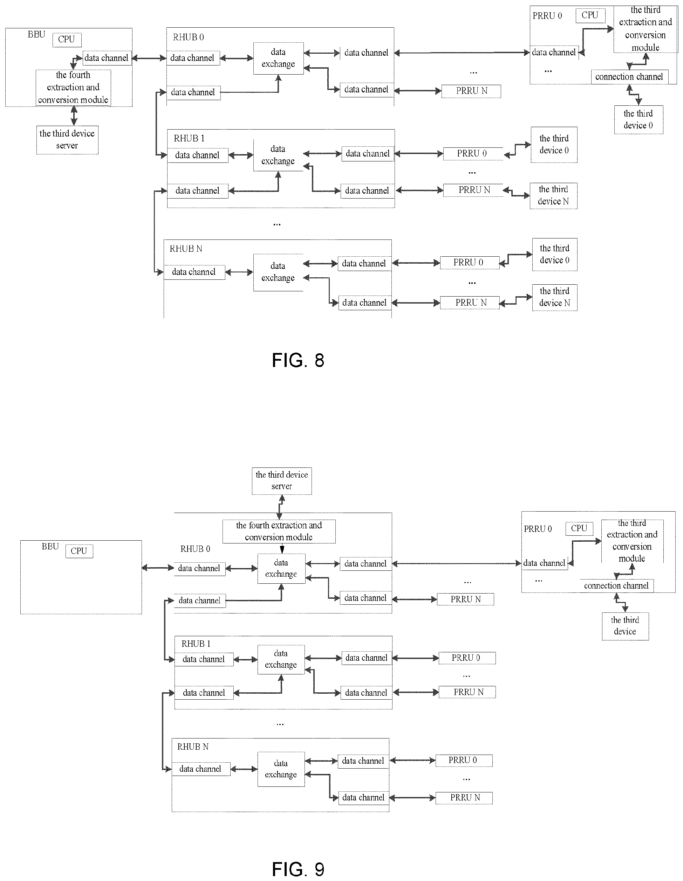

As shown in FIGS. 8 and 9, an access system for the third party device based on the room division system described in the present application. FIG. 8 is a schematic diagram of an access system for the third party that takes the data channel when the BBU is connected to a third party server according to an embodiment of the present application. FIG. 9 is a schematic diagram of the access system for the third party that takes the data channel when the RHUB is connected to the third party server according to an embodiment of the present application. The system includes: a third party device, a PRRU, a RHUB, a BBU, and a third party server. The PRRU is used for, connecting to the third party device through the first conversion interface and receiving third party data of the third party device, and generating a fifth message according to the third party data and sending the fifth message to the RHUB through the data channel, the RHUB exchanging and merging the data sent from all the PRRUs of this level and the RHUB of the next level to generate a sixth message, and converting the sixth message into the seventh message and sending the seventh message to the third party server through the data channel.

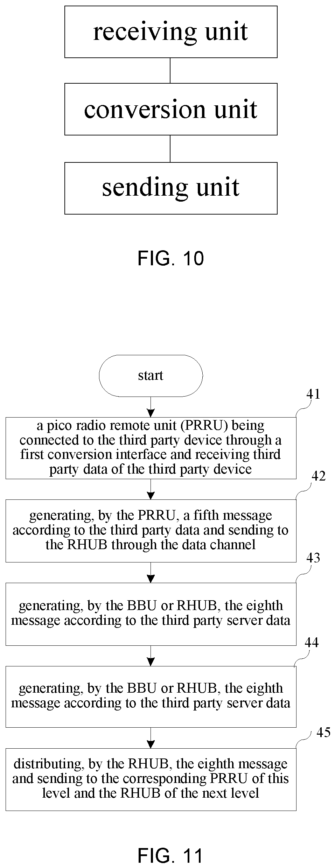

As shown in FIG. 10, the PRRU as described in the present application includes: a receiving unit, connected to a third party device through a first conversion interface and receiving third party data of the third party device; a conversion unit for generating a fifth message according to the third party data; a sending unit for sending the fifth message to a RHUB through a data channel, the RHUB exchanging and merging data sent from all the PRRUs of this level and the RHUB of a next level to generate a sixth message; and converting the sixth message into a seventh message and sending the seventh message to the third party server through the data channel.

As shown in FIG. 11, an access method for the third party device according to the room division system as described in the present application includes:
operation 41, the PRRU being connected to the third party device through a first conversion interface and receiving third party data of the third party device
operation 42, generating, by the PRR, a fifth message according to the third party data and sending the fifth message to the RHUB through a data channel, exchanging and merging, by the RHUB, data sent from all the PRRUs of this level and the RHUB of a next level to generate a sixth message, and converting the sixth message into a seventh message and sending the seventh message to the third party server through the data channel.

The operation of the exchanging and merging, by the RHUB, the data sent from all the PRRUs of this level and the RHUB of the next level to generate the sixth message includes:
(a) staggering, by a RHUB of a non-first level, the fifth message according to location information of the device in the fifth message sent from the PRRU of this level and location information of the device in the fifth message sent from the PRRU hung on a cascaded RHUB; exchanging the fifth message to the preset location to merge into a first merged data C; rearranging, a RHUB of a first level, the fifth message sent from the PRRU of this level and the first merged data C sent from the RHUB of the next level to merge into a second merged data D.

The above is the uplink process by using the data channel.

The method further includes:
operation 43, the BBU or RHUB being connected to a third party server through a second conversion interface and receiving third party server data.
operation 44, generating, by the BBU or the RHUB, an eighth message according to the third party server data.
operation 45, distributing, by the RHUB, the eighth message, and conveying to the corresponding PRRU of this level and to the RHUB of the next level; and converting, by the corresponding PRRU of this level, the eighth message into a ninth message and sending the ninth message to the third party device.

The above is the downstream flow using the data channel.
the fifth message includes: a PRRU number bit for indicating location information of the third party device, a data valid enable bit for indicating whether the third party data is valid, a third party data flag bit for indicating types of messages, a control information bit for conveying control information for the interaction between the third party server and the third party device, and a third party data bit for carrying the third party device data; the first merged data C includes at least one fifth message; the second merged data D includes at least one fifth message; the eighth message includes at least one fifth message; and the ninth message is determined according to format requirements of the third party device.

FIGS. 8 and 9 both show the access of the third party according to data channels, the main difference is whether the third party server is on the BBU or on the RHUB, and the third embodiment is explained in terms of FIG. 8.

### The third embodiment.

Uplink processing includes the following operations:
(1) The third party device is accessed to the PRRU and the third party device data is intercepted.
(2) The logic of the PRRU performs the third extraction conversion on the third party data, marks the corresponding data with a valid flag (the valid flag can include the corresponding PRRU number, data valid enable and other information), and then encapsulates the customized data and conveys it to the RHUB through the data channel.
(3) The RHUB exchanges and merges the data sent from all the PRRUs of this level and the RHUB of the next level, and then sends to the data extraction and conversion module 4 in the RHUB/BBU.
(4) The RHUB/BBU performs the fourth extraction and conversion on data and packages into the corresponding format and sends to the third party server.

Downlink processing includes the following operations:
(1) The data sent from the third party server hung outside the BBU/RHUB is intercepted.
(2)The logic of the BBU/RHUB performs the fourth extraction and conversion on data, and packages into a customized data format (which can include the corresponding PRRU number, data valid enable and other information), and sends to the RHUB through the data channel.
(3) The RHUB distributes the data through internal exchanging and conveys it to the corresponding PRRU of this level and to the RHUB of the next level.
(4) The underlying logic of the PRRU performs the third extraction and conversion on the data into the corresponding format and sends it to the third party device.

The fourth embodiment: the RHUB is connected to the third party server by taking the third party access of the data channel.

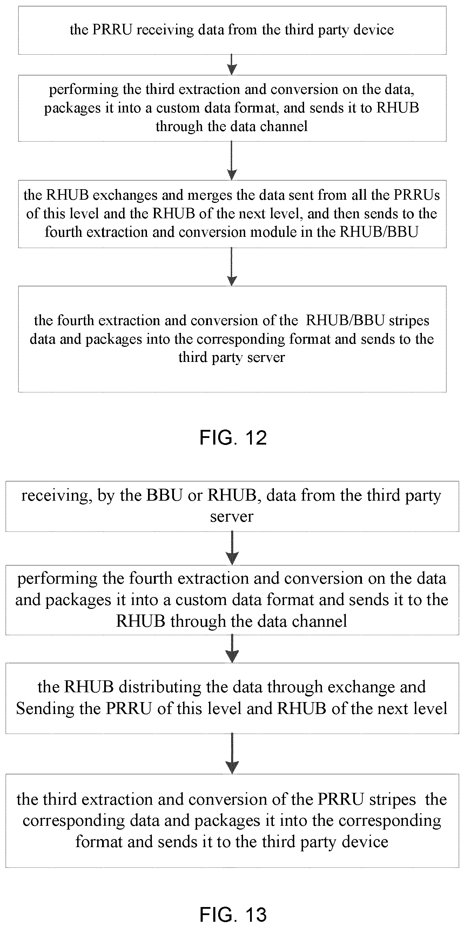

Uplink processing: as shown in FIG. 12, includes:
(1) The third party device is connected to the PRRU through the conversion interface, and the third party device conveys the data to the extraction and conversion module 3 of the PRRU through this conversion interface, and the PRRU supplies power to the third party device through a power over ethernet (POE).
(2) The extraction and conversion module 3 of PRRU extracts the valid data into A data according to the relevant interface protocol of the third party device, then marks A data with valid flags (valid flags include a corresponding PRRU number, a data valid enable, a third party flag and other information), then encapsulates it into customized data B, and places data B into the fixed position of the customized invalid data, and multiplexes the customized data channel to conveys the data to the RHUB.
(3) The RHUB of the non-first level sends the third party data sent from the PRRU of this level and from the PRRU hung under the cascaded RHUB to the corresponding exchange module, and the exchange module arranges the sent third party data in a staggered manner according to the relevant location information and exchanges it to the customized fixed position to become the merged data C, and sends to the RHUB of a higher-level through the data channel.

The RHUB of the first level re-arranges the data B sent from the PRRU of this level and the merged data C sent from the next level through the exchange module, and merges into the data D and sends to the extraction conversion module 4.
(4) The extraction conversion module 4 on the RHUB of the first level extracts data D according to the third party flag information and data valid information and PRRU number, and then converts it into the format E requested by the third party server, and finally sends the E data to the third party server for processing.

Downlink processing: as shown in FIG. 13, includes:
(1) The third party server is connected to the RHUB of the first level through the conversion interface, and the third party server conveys data A to the extraction and conversion module 4 of the RHUB of the first level through this conversion interface.
(2) The extraction conversion module 4 of RHUB0 extracts data A according to the relevant protocol and then packages it into a customized data format B, where the data in the customized data format B contains information such as a valid enable, a PRRU number, a third party flag, etc.; the data sent to different PRRUs are placed in the corresponding positions.
(3) The extraction and conversion module 4 sends data format B to the internal exchange module, the internal exchange module rearranges data B according to the corresponding PRRU number and corresponding location information, places it in the fixed position of the customized invalid data to form data C, and distributes it through the customized data channel to PRRU under this level and the cascaded RHUB.
(4) The underlying logic of the PRRU sends data C to the extraction and conversion module 3, the extraction and conversion module 3 extracts data C according to the third party flag information and data valid information and the PRRU number, strips the corresponding information from the extracted data to convert into the required format D data, and sends required format D data to the third party device.

The data format B is as follows: A1 A2 A3 A4 A5 A6 A7 A8 A9.

A1 includes: PRRU number: X bit, used to define the location information of the device and used to process the data by the extraction and conversion module; data valid enable: 1 bit, used to indicate whether the byte is valid; third party flag: 1 bit, used to distinguish whether the data is the third party or other data; other control information: Y bit, used to convey the control information of the interaction between the third party server and the device; valid data: Z bit, used to transmit data.

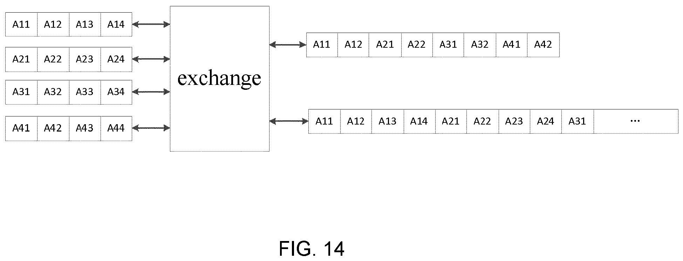

The exchange module can stagger each path of data according to the PRRU number and place it in the corresponding position. In FIG. 14, the data format B is on the left and the data format C is on the right.

To save bandwidth, the exchange module can selectively only let valid data pass according to the valid flag.

The above embodiment shows that the maximum capacity of A has 4 data, but the amount of data is not so large, there are only 2 valid data, only two data can pass through the exchange module, or all data can pass.

The information of the final mergence, the data will be extracted and converted to the server according to the interface format requirements of the third party server.

In the access method and apparatus for the third party device described in the present application, under the maintaining the framework of the existing room division system, the corresponding conversion interface and extraction conversion module are added on the PRRU to complete the access to the third party slave device, the corresponding conversion interface and the extraction conversion module are added on the BBU/RHUB to complete the access to the third party server. In addition to the additional conversion interface and conversion module, the control channel and data channel used for transmission completely multiplex the corresponding channels in the original room system, so that no new processing channels need to be opened for the access of the third party, which simplifies the processing process and saves corresponding resources. The device based on this method can be flexible access to third party device, which is important in the expansion for the business application scenarios of the room division system.

The person skilled in the art can understand that all or part of the operations to achieve the method for the above embodiments can be done by a program to instruct the relevant hardware, the program is stored in a storage medium, including a number of instructions to make a device (can be a microcontroller, chip, etc.) or processor to perform all or part of the operations of the method for each embodiment of the present application. The aforementioned storage media includes: a USB flash drive, a mobile hard disk, a read-only memory (ROM), a random access memory (RAM), a disk or CD-ROM, and other media that can store program code.

Those skilled in the art can understand that each of the above embodiments is a specific embodiment for realizing the present application, while in practical application, various changes can be made to it in form and details without deviating from the scope of the present application.

## Claims

1. An access method for a third party device, **characterized by** comprising:
a pico radio remote unit (PRRU) being connected to the third party device through a first conversion interface and receiving third party device data of the third party device;
generating, by the PRRU, a first message according to the third party device data; and
sending, by the PRRU, the first message to a remote radio unit hub (RHUB) or a base band unit (BBU) through a control channel, and the RHUB or the BBU generating a second message according to the first message and sending the second message to a third party server through a second conversion interface.

2. The method according to claim 1, wherein the operation of sending, by the PRRU, the first message to the RHUB or the BBU through the control channel comprises:
sending, by the PRRU, the first message to the BBU through the RHUB in the control channel in response that the third party server is connected to the BBU.

3. The method according to claim 2, further comprising:
receiving, by the BBU or RHUB, third party server data of the third party server through the second conversion interface;
generating, by the BBU or RHUB, a third message according to the third party server data; and
sending, by the BBU or RHUB, the third message to the PRRU through the control channel, and generating, by the PRRU, a fourth message according to the third message and sending the fourth message to the third party device.

4. The method according to claim 3, wherein
the first message comprises: a PRRU number bit for indicating location information of the third party device, a data valid enable bit for indicating the number of valid bytes of third party data, a third party data flag bit for indicating types of messages, a control information bit for conveying control information for an interaction between the third party server and the third party device, and a third party data bit for carrying data of the third party device;
the second message is determined according to data format requirements of the third party server;
the third message comprises: a PRRU number bit for indicating location information of the third party device, a data valid enable bit for indicating the number of valid bytes of third party data, a third party data flag bit for indicating types of messages, a control information bit for conveying control information for an interaction between the third party server and the third party device, and a third party data bit for carrying the data of third party server; and
the fourth message is determined on data format requirements of the third party device.

5. The method according to claim 4, wherein the operation of sending, by the BBU or RHUB, the third message to the PRRU through the control channel comprises:
identifying, by the BBU or RHUB, a type of the third message according to the third party data flag bit carried in the third message; and
sending the PRRU corresponding the PRRU number bit through the control channel according to the PRRU number bit carried in the third message.

6. A pico radio remote unit (PRRU), **characterized by** comprising:
a receiving unit, connected to a third party device through a first conversion interface and receiving third party device data of the third party device;
a generation unit, generating a first message according to the third party device data; and
a sending unit, sending the first message to a RHUB or a BBU through a control channel, and the RHUB or the BBU generating a second message according to the first message, and sending the second message to a third party server through a second conversion interface.

7. An access system for a third party device, **characterized by** comprising: a third party device, a PRRU, a RHUB, a BBU, and a third party server;
the PRRU being connected to the third party device through a first conversion interface;
the RHUB being connected to the BBU through the RHUB;
the third party server being connected to the RHUB or BBU through a second conversion interface; and
the PRRU for connecting to the third party device through the first conversion interface and receiving third party device data of the third party device, generating a first message according to the third party device data, conveying the first message to the RHUB or BBU through a control channel, the RHUB or the BBU generating a second message according to the first message, and sending the second message to the third party server through the second conversion interface.

8. An access method for a third party device, **characterized by** comprising:
a pico radio remote unit (PRRU) being connected to the third party device through a first conversion interface and receiving third party data of the third party device; and
generating, by the PRRU, a fifth message according to the third party data and sending the fifth message to the RHUB through a data channel;
exchanging and merging, by the RHUB, data sent from all PRRUs of this level and the RHUB of a next level to generate a sixth message, and converting the sixth message into a seventh message and sending the seventh message to the third party server through the data channel.

9. The method according to claim 8, wherein the operation of exchanging and merging, by the RHUB, data sent from all PRRUs of this level and the RHUB of the next level to generate the sixth message comprises:
staggering, by a RHUB of a non-first level, the fifth message according to location information of the device in the fifth message sent from the PRRU of this level and location information of the device in the fifth message sent from the PRRU hung under a cascaded RHUB, exchanging the fifth message to a preset location to merge into a first merged data C;
rearranging, by a RHUB of a first level, the fifth message sent from the PRRU of this level and the first merged data C sent from the RHUB of the next level to merge into a second merged data D.

10. The method according to claim 9, further comprising:
the BBU or RHUB being connected to a third party server through a second conversion interface and receiving third party server data;
converting, by the BBU or the RHUB, the third party server data and packaging it into an eighth message; and
distributing, by the RHUB, the eighth message, and conveying to the corresponding PRRU of this level and to the RHUB of the next level, and converting, by the corresponding PRRU of this level, the eighth message into a ninth message and sending the ninth message to the third party device.

11. The method according to claim 10, wherein
the fifth message comprises: a PRRU number bit for indicating location information of the third party device, a data valid enable bit for indicating whether the third party data is valid, a third party data flag bit for indicating types of messages, a control information bit for conveying control information for the interaction between the third party server and the third party device, and a third party data bit for carrying the third party device data;
the first merged data C comprises at least one fifth message;
the second merged data D comprises at least one fifth message;
the eighth message comprises at least one fifth message; and
the ninth message is determined according to format requirements of the third party device.

12. A pico radio remote unit (PRRU), **characterized by** comprising:
a receiving unit, connected to a third party device through a first conversion interface and receiving third party data of the third party device;
a conversion unit, generating a fifth message according to the third party data; and
a sending unit, sending the fifth message to a RHUB through a data channel, the RHUB exchanging and merging data sent from all the PRRUs of this level and the RHUB of a next level to generate a sixth message; and converting the sixth message into a seventh message and sending the seventh message to a third party server through a data channel.

13. An access system for a third party device, **characterized by** comprising: a third party device, a PRRU, a RHUB, a BBU, and a third party server;
the PRRU for connecting to the third party device through a first conversion interface, and receiving third party data of the third party device, generating a fifth message according to the third party data and sending the fifth message to the RHUB through a data channel; and
the RHUB exchanging and merging data sent from all PRRUs of this level and the RHUB of a next level to generate a sixth message, and converting the sixth message into a seventh message and sending the seventh message to the third party server through the data channel.
